(19) Europäisches Patentamt
European Patent Office
Office européen des brevets

(11) Veröffentlichungsnummer: **0 050 284**
**B1**

(12) # EUROPÄISCHE PATENTSCHRIFT

(45) Veröffentlichungstag der Patentschrift: **02.01.85**

(51) Int. Cl.³: **C 08 G 18/78**, C 08 G 18/80, C 08 G 18/38, C 07 C 133/00, C 09 D 3/72

(21) Anmeldenummer: **81108186.8**

(22) Anmeldetag: **12.10.81**

(54) **Neue Lackpolyisocyanate, ein Verfahren zu ihrer Herstellung, sowie ihre Verwendung als Isocyanatkomponente in hitzehärtbaren Zweikomponenten-Polyurethanlacken.**

(30) Priorität: **22.10.80 DE 3039824**

(43) Veröffentlichungstag der Anmeldung: **28.04.82 Patentblatt 82/17**

(45) Bekanntmachung des Hinweises auf die Patenterteilung: **02.01.85 Patentblatt 85/1**

(84) Benannte Vertragsstaaten: **AT BE CH DE FR GB IT LI NL SE**

(56) Entgegenhaltungen:
**EP - A - 0 000 016**
**AT - B - 253 221**
**DE - A - 1 720 711**
**DE - A - 2 346 818**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **König, Eberhard, Dr., Gelber Weg 22, D-6242 Kronberg 2 (DE)**
Erfinder: **Pedain, Josef, Dr., Haferkamp 6, D-5000 Köln 80 (DE)**
Erfinder: **Kreuder, Hans Joachim, Dr., Doerperhofstrasse 35, D-4150 Krefeld (DE)**

EP 0 050 284 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft neue, als Isocyanatkomponente in hitzehärtbaren Zweikomponenten-Polyurethanlacken geeignete Lackpolyisocyanate mit zumindest teilweise blockierten Isocyanatgruppen, die aufgrund eingebauter Stabilisatoren die Herstellung von nicht vergilbenden Lacken gestatten, ein Verfahren zur Herstellung der neuen Lackpolyisocyanate, sowie deren Verwendung als Isocyanatkomponente in hitzehärtbaren Zweikomponenten-Polyurethanlacken.

Polyurethaneinbrennlacke bestehen, unabhängig davon ob sie als Lösung oder pulverförmig verarbeitet werden, im wesentlichen aus einer Hydroxylgruppen aufweisenden Komponente und einer Polyisocyanatkomponente, deren NCO-Gruppen vollständig oder teilweise — diese zuletzt genannte Möglichkeit wird z. B. in der US-A-4 055 550 oder in der DE-A-2 842 641 beschrieben — mit einem Blockierungsmittel blockiert und somit an einer vorzeitigen Reaktion gehindert sind. Erst unter dem Einfluß von Wärme (beispielsweise Erhitzen der beschichteten Substrate auf 180°C während 30 Minuten) kommt es unter Abspaltung des Blockierungsmittels zu einer, den Lack bildenden Vernetzungsreaktion.

Die bekannten hitzehärtbaren Zweikomponenten-Polyurethanlacke zeigen jedoch unter dem Einfluß der zum Einbrennen erforderlichen hohen Temperaturen eine mehr oder minder starke Tendenz zur Vergilbung. Dies ist insbesondere bei der industriellen Serienlackierung von Nachteil, wenn z. B. wegen technischer Störungen entweder zu lange oder bei zu hohen Temperaturen eingebrannt wird. Es resultieren in einem solchen Fall verschieden gefärbte Teile einer Serie. Problematisch ist auch die Herstellung eines vergilbungsfreien Klarlackes auf z. B. silbrigem Untergrund, weil hier durch das Fehlen des Pigments der störende Effekt besonders augenfällig wird.

Man hat versucht, diesen Nachteil mit der Entwicklung besonders wärmefarbstabiler Polyisocyanate abzustellen. Derartige Polyisocyanate, wie sie z. B. in der EP-A-798 sowie in der DE-A-2 842 641 beschrieben sind, basieren auf trimerisiertem 1-Isocyanato-3,3,5-trimethyl-5-isocyanatomethyl-cyclohexan (Isophorondiisocyanat, abgekürzt IPDI). Nachteilig bei den in den genannten Vorveröffentlichungen beschriebenen Lackpolyisocyanaten bzw. Lackierungsverfahren ist vor allem die Beschränkung auf nur eines der technisch gut zugänglichen Polyisocyanate, ganz abgesehen davon, daß auch die Vergilbungsresistenz der mit diesem speziellen Lackpolyisocyanat hergestellten Lacke, insbesondere Klarlacke, noch verbesserungswürdig ist.

Die DE-A-1 720 711 weist zwar einen Weg, wie beliebige Polyisocyanate so modifiziert werden können, daß sie die Herstellung von Lacken einer erhöhten Vergilbungsresistenz gestatten. Die in dieser Vorveröffentlichung empfohlenen, modifizierten Polyisocyanate sind jedoch mit erheblichen Nachteilen behaftet. So ist das Herstellungsverfahren der stabilisierten Polyisocyanate der genannten Vorveröffentlichungen technisch aufwendig, da es erforderlich ist, die zur Stabilisierung eingesetzte N,N-Dialkyl-hydrazinverbindung mit einem großen Überschuß an niedermolekularem Polyisocyanat umzusetzen und anschließend diesen nicht-umgesetzten Teil des Polyisocyanates wieder destillativ zu entfernen. Außerdem ist die Verwendung von N,N-Dialkyl-substituiertem Hydrazin als Stabilisierungsmittel problematisch. Mit derartigen Polyisocyanaten hergestellte Lackfilme enthalten stets noch basische N-Atome, die wiederum leicht dem Angriff atmosphärischer Säuren zugänglich sind und somit die Beständigkeit des Lackes vor allem im Industrieklima herabsetzen.

Es war die der vorliegenden Erfindung zugrundeliegende Aufgabe, neue Lackpolyisocyanate zur Verfügung zu stellen, die durch Modifizierung beliebiger Polyisocyanate in einer einfach zu handhabenden Reaktion herstellbar sind, und die ihrerseits die Herstellung von nicht-vegilbenden Einbrennlacken gestatten. Diese Aufgabe konnte durch das nachstehend näher beschriebene erfindungsgemäße Verfahren gelöst werden.

Gegenstand der vorliegenden Erfindung sind Lackpolyisocyanate, gekennzeichnet durch einen Gehalt, bezogen auf das Gewicht ohne Einbeziehung des Gewichts des Blockierungsmittels,

a) an freien Isocyanatgruppen von 0 bis 8 Gew.-%,
b) an mit an sich bekannten Blockierungsmitteln blockierten Isocyanatgruppen von 10 bis 28 Gew.-% und
c) Struktureinheiten der Formel

$$-NH-NH-CO-O-$$

von 2 bis 10 Gew.-%.

Gegenstand der vorliegenden Erfindung ist auch ein Verfahren zur Herstellung dieser Lackpolyisocyanate, welches dadurch gekennzeichnet ist, daß man

a) 10 bis 30 Mol-% der Isocyanatgruppen eines organischen Polyisocyanats mit (i) alkoholische Hydroxylgruppen und (ii) Struktureinheiten der Formel

$$-O-CO-NH-NH-CO-O-$$

und/oder der Formel

$H_2N-NH-CO-O-$

aufweisenden Umsetzungsprodukten von 1 Mol Hydrazin mit 1 bis 2 Mol eines cyclischen Carbonats unter Bildung von Urethangruppen und gegebenenfalls Gruppen der Formel

$-NH-NH-CO-O-$

zur Reaktion bringt und

b) 50 bis 90 Mol-% der Isocyanatgruppen des Ausgangsisocyanats mit an sich bekannten Blockierungsmitteln blockiert,

wobei die Umsetzung gemäß a) vor, während oder nach der Umsetzung b) vorgenommen wird.

Gegenstand der vorliegenden Erfindung ist schließlich auch die Verwendung der neuen Lackpolyisocyanate als Isocyanatkomponente in hitzehärtbaren Zweikomponenten-Polyurethanlacken.

Ausgangsmaterialien für das erfindungsgemäße Verfahren sind

a) beliebige organische Polyisocyanate,
b) Struktureinheiten der Formeln

$-O-CO-NH-NH-CO-O-$

und/oder

$H_2N-NH-CO-O-$

aufweisende Umsetzungsprodukte von Hydrazin mit cyclischen Carbonaten und
c) beliebige Blockierungsmittel für organische Polyisocyanate.

Die AT-B-253 221 lehrt den Einbau von organischen Säurehydraziden in die Hauptkette von Polyurethanelastomeren durch Mitverwendung von Hydrazid-Gruppierungen aufweisenden Kettenverlängerungsmitteln, jedoch kann diese Vorveröffentlichung keinen Hinweis auf die erfindungsgemäß aufgefundenen Zusammenhänge vermitteln, da es sich bei den Säurehydraziden der Vorveröffentlichung mit der einzigen Ausnahme des N-Methylamino-bis-hydroxyethyl-carbazinesters nicht um Verbindungen handelt, die die obengenannte charakteristische Struktureinheit aufweisen, da die Säurehydrazide gemäß Vorveröffentlichung nicht zur Herstellung von modifizierten Polyisocyanaten für Einbrennlacke eingesetzt werden, sondern vielmehr als Kettenverlängerungsmittel bei der Herstellung von Polyurethanelastomerfäden Verwendung finden, und insbesonder da der Einbau der Säurehydrazide in die Hauptkette der Polyurethanelastomeren zur Verbesserung der Einfärbbarkeit der Fäden dient, die zwar auch eine Erhöhung der Vergilbungsresistenz insbesondere bei Einwirkung von UV-Strahlen bewirkt, die jedoch mit dem Phänomen der Vergilbung von Einbrennlacken beim Einbrennen nichts zu tun hat.

Beispiele geeigneter Polyisocyanate a) sind

i) beliebige aliphatische, cycloaliphatische, araliphatische oder aromatische Polyisocyanate, insbesondere Diisocyanate eines zwischen 168 und 300 liegenden Molekulargewichts wie z. B. 2,4- und/oder 2,6-Diisocyanatotoluol, 2,4'- und/oder 4,4'-Diisocyanato-diphenylmethan die methylsubstituierten Derivate der zuletzt genannten Diisocyanate, Hexamethylendiisocyanat, Isophorondiisocyanat, m- und p-Xylylendiisocyanat, 4,4'-Diisocyanato-dicyclohexylmethan, 1-Methyl-2,4- und/oder 1-Methyl-2,6-diisocyanato-cyclohexan, sowie beliebige Gemische dieser einfachen Diisocyanate;
ii) Umsetzungsprodukte der unter (i) genannten Diisocyanate mit unterschüssigen Mengen an 2- und/oder 3wertigen Hydroxylverbindungen mit aliphatisch gebundenen Hydroxylgruppen des Molekulargewichtsbereichs 62—400 wie z. B. Ethylenglykol, Diethylenglykol, Triethylenglykol, Propylenglykol, Dipropylenglykol, Tripropylenglykol, Tetrapropylenglykol, Tetramethylendiol, Hexamethylendiol, 4,4'-Dihydroxy-dicyclohexylmethan, 1,4-Bis-(2-hydroxyethoxy)-benzol, Trimethylolpropan oder Trishydroxyethylisocyanurat;
iii) Biuretgruppen aufweisende Polyisocyanate, wie sie in an sich bekannter Weise durch teilweise Biuretisierung der unter a) beispielhaft genannten Diisocyanate, insbesondere von Hexamethylendiisocyanat, erhalten werden;
iv) Uretdiongruppen aufweisende Polyisocyanate, wie sie beispielsweise in der DE-A-2 502 934 beschrieben sind;
v) Isocyanuratgruppen aufweisende Polyisocyanate, wie sie z. B. durch an sich bekannte Trimerisierung der unter i) genannten Diisocyanate zugänglich sind und wie sie beispielsweise in EP-A-10 589, DE-A-2 707 656 oder DE-A-2 806 731 beschrieben sind, insbesondere solche Isocyanuratgruppen aufweisende Polyisocyanate, die durch Trimerisierung von Hexamethylendiisocyanat, 2,4- und gegebenenfalls 2,6-Diisocyanato-toluol oder Isophorondiisocyanat erhalten worden sind, sowie sogenannte Mischtrimerisate von beliebigen Mischungen der unter i) genannten Diisocyanate.

Die für das erfindungsgemäße Verfahren geeigneten Polyisocyanate a), insbesondere die oben beispielhaft genannten Ausgangspolyisocyanate, weisen einen zwischen 10 und 50 Gew.-% liegenden NCO-Gehalt auf. Für das erfindungsgemäße Verfahren besonders gut geeignete Polyisocyanate a) sind Polyisocyanate bzw. Polyisocyanatgemische mit einem (mittleren) NCO-Gehalt von 10 bis 50 Gew.-%, insbesondere 14 bis 35 Gew.-%, ausgewählt aus der Gruppe, bestehend aus Hexamethylendiisocyanat, 1-Isocyanato-3,3,5-trimethyl-5-isocyanatomethylcyclohexan, 4,4'-Diisocyanato-dicyclohexylmethan, 2,4- und/oder 2,6-Diisocyanatotoluol, 2,4'- und/oder 4,4'-Diisocyanato-diphenylmethan, Urethangruppen aufweisende Umsetzungsprodukte dieser Diisocyanate mit unterschüssigen Mengen an aliphatischen Di- oder Triolen des Molekulargewichtsbereichs 62—400 und den Isocyanat- und Isocyanuratgruppen aufweisenden Trimerisaten bzw. Mischtrimerisaten der genannten Diisocyanate.

Bei den für das erfindungsgemäße Verfahren geeigneten Ausgangsmaterialien b) handelt es sich um Struktureinheiten der Formeln

$$-O-CO-NH-NH-CO-O-$$

und/oder

$$H_2N-NH-CO-O-$$

aufweisende Umsetzungsprodukte von Hydrazin und bestimmten cyclischen Carbonaten. Zur Herstellung dieser Umsetzungsprodukte wird Hydrazin und vorzugsweise Hydrazinhydrat eingesetzt. Reaktionspartner für das Hydrazin- bzw. Hydrazinhydrat sind hierbei beliebige cyclische Alkylencarbonate mit 5- oder 6gliedrigen Ringen wie z. B. Ethylenglykol- und Propylenglykolcarbonat (2-Oxo-4-methyl-1,3-dioxolan), 2-Oxo-4-hydroxymethyl-1,3-dioxolan (Umsetzungsprodukt aus 1 Mol Glycerin mit 1 Mol Diphenylcarbonat) sowie 1,3-Dioxanon-(2)-ring-Verbindungen, wie sie z. B. durch Umsetzen von 1,3-Propandiol oder Neopentylglykol mit Diphenylcarbonat gebildet werden. Bevorzugt sind Ethylen- und Propylenglykolcarbonat.

Für die Herstellung der erfindungsgemäßen Ausgangsmaterialien b) wird vorzugsweise Hydrazinhydrat, gegebenenfalls in einem Lösungsmittel wie z. B. Toluol oder Isopropanol vorgelegt und bei 40 bis 100°C mit den beispielhaft genannten cyclischen Carbonaten im Molverhältnis Hydrazin zu Carbonat von 1 : 1 bis 1 : 2 umgesetzt. Nach Abdestillieren des Wassers und gegebenenfalls des Lösungsmittels verbleibt ein farbloses Öl, bzw. ein Festprodukt, das als erfindungsgemäßes Ausgangsmaterial b) eingesetzt werden kann. Gemäß einer besonders bevorzugten Ausführungsform erfolgt die Herstellung der Hydrazin-Addukte b) in dem beim erfindungsgemäßen Verfahren mitzuverwendenden Blokkierungsmittel (z. B. $\varepsilon$-Caprolactam) als Lösungsmittel, welches selbstverständlich dann im Anschluß an die Herstellung der Hydrazinaddukte nicht abdestilliert wird. Vielmehr kann eine derartige Lösung des Addukts in dem Blockierungsmittel direkt bei der Durchführung des erfindungsgemäßen Verfahrens eingesetzt werden.

Besonders bevorzugte Hydrazinaddukte b) sind die Umsetzungsprodukte von Hydrazinhydrat mit Ethylenglykol- oder Propylenglykolcarbonat im Molverhältnis Hydrazin zu Carbonat von 1 : 1,1 bis 1 : 1,7.

Bei den erfindungsgemäßen Hydrazinaddukten b) handelt es sich um Verbindungen bzw. um Gemische von Verbindungen der Formeln

$$H_2N-NH-CO-O-R-OH$$

und/oder

$$HO-R-O-CO-NH-NH-CO-O-R-OH$$

wobei R für den bezüglich der Herstellung der Hydrazinaddukte indifferenten, gegebenenfalls Alkyl- oder Hydroxyl-substituierten (z. B. im Falle der Verwendung von cyclischen Carbonaten auf Basis von Glycerin und Diphenylcarbonat) Alkylenrest des cyclischen Carbonats steht.

Für das erfindungsgemäße Verfahren geeignete Blockierungsmittel c) sind beliebige an sich bekannte Blockierungsmittel für organische Polyisocyanate wie z. B. Phenol, $C_1$—$C_{18}$-alkylsubstituierte Phenole, Hydroxydiphenyl, Butanon- oder Cyclohexanonoxim, N-Hydroxy-hexahydrophthalimid, tert.-Butanol, Malonsäurediethylester, Acetessigsäureethylester, die verschiedenen isomeren Triazole und insbesondere $\varepsilon$-Caprolactam.

Die Durchführung des erfindungsgemäßen Verfahrens erfolgt im Temperaturbereich zwischen 50

und 200°C, insbesondere zwischen 100 und 160°C. Die Reaktionspartner a), b) und c) kommen hierbei in solchen Mengen zum Einsatz, daß in den erfindungsgemäßen Lackpolyisocyanaten

0 bis 8, insbesondere 0 bis 4 Gew.-% an freien Isocyanatgruppen,
10 bis 28, insbesondere 12 bis 26 Gew.-% an blockierten Isocyanatgruppen (berechnet als NCO, Molekulargewicht = 42) und
2 bis 10, vorzugsweise 3 bis 8 Gew.-% an Struktureinheiten der Formel

$$-NH-NH-CO-O-$$

aufweisen, wobei sich die Prozentangaben auf das Lackpolyisocyanat exklusive dem Gewicht des Blockierungsmittels beziehen. Dies bedeutet, daß im allgemeinen pro 100 Gew.-Teilen Ausgangspolyisocyanat a) 5 bis 25, insbesondere 6 bis 19 Gew.-Teile Hydrazinaddukt b) und 30 bis 80, vorzugsweise 40 bis 70 Gew.-Teile Blockierungsmittel c) zum Einsatz gelangen, so daß in den Verfahrensprodukten 0 bis 20, vorzugsweise 0 bis 15 Mol-% der Isocyanatgruppen des Ausgangsisocyanats a) in freier Form vorliegen, 50 bis 90, vorzugsweise 50 bis 80 Mol-% der Isocyanatgruppen des Ausgangspolyisocyanats a) in blockierter Form und 10 bis 30, vorzugsweise 10 bis 20 Mol-% der Isocyanatgruppen des Ausgangspolyisocyanats a) in mit dem Hydrazinaddukt abreagierter Form vorliegen.

Die Umsetzung des Ausgangspolyisocyanats a) mit dem Hydrazinaddukt b) und dem Blockierungsmittel c) kann nacheinander oder gleichzeitig erfolgen, wobei im Falle der Ausführungsform, bei welcher zuerst die Blockierung und im Anschluß hieran die Modifizierung mit dem Hydrazinaddukt b) erfolgt, selbstverständlich darauf geachtet werden muß, daß nicht alle Isocyanatgruppen des Ausgangspolyisocyanats a) mit dem Blockierungsmittel c) blockiert werden. Gemäß einer besonders bevorzugten Ausführungsform des erfindungsgemäßen Verfahrens erfolgt die Umsetzung des Ausgangspolyisocyanats a) gleichzeitig mit dem Hydrazinaddukt b) und dem Blockierungsmittel c) unter Verwendung von Lösungen des Hydrazinaddukts im Blockierungsmittel. Besonders bevorzugt geht man hierbei so vor, daß man das Ausgangspolyisocyanat a) zunächst mit einem Teil des Blockierungsmittels teilblockiert und anschließend das teilblockierte Polyisocyanat mit einer Lösung des Hydrazinaddukts in der Restmenge des Blockierungsmittels umsetzt. Das erfindungsgemäße Verfahren kann in Substanz oder in Gegenwart geeigneter inerter Lösungsmittel wie z. B. Ethylenglykolmonoethyletheracetat, Butylacetat, Methyl- bzw. Methylisobutylketon, oder Toluol oder Xylol durchgeführt werden. Die erfindungsgemäße Umsetzung wird im allgemeinen unter Wärmezufuhr innerhalb der genannten Temperaturbereiche bis zum Entstehen einer homogenen Schmelze oder Lösung durchgeführt. Anschließend werden gegebenenfalls verwendete Hilfslösungsmittel und gegebenenfalls vorliegendes überschüssiges Blockierungsmittel beispielsweise destillativ entfernt. Falls die erfindungsgemäßen Verfahrensprodukte in lösungsmittelhaltigen Zweikomponenten-Polyurethanlacken eingesetzt werden sollen, kann selbstverständlich auch eine Entfernung des Lösungsmittels entfallen, selbstverständlich vorausgesetzt, daß bereits bei der Herstellung der erfindungsgemäßen Lackpolyisocyanate Lösungsmittel bzw. Lösungsmittelgemische verwendet worden sind, die auch für die erfindungsgemäße Verwendung der Lackpolyisocyanate in lösungsmittelhaltigen Lacken geeignet sind.

Die auf diese Weise erhältlichen erfindungsgemäßen Lackpolyisocyanate verleihen den mit ihnen hergestellten Lacken eine erhöhte Wärmefarbstabilität, wobei als besonderer Vorteil des erfindungsgemäßen Verfahrens dessen einfache und wirtschaftliche Durchführbarkeit herausgestellt werden muß. Da die erfindungswesentlichen Hydrazinaddukte b) im Sinne der Isocyanat-Additionsreaktion vorzugsweise difunktionell sind, wird die NCO-Funktionalität des Ausgangspolyisocyanats durch den Einbau der Hydrazinaddukte b) im Gegensatz zum Verfahren der DE-A-1 720 711 nicht verändert.

Die erfindungsgemäßen Lackpolyisocyanate eignen sich als Isocyanatkomponente von hitzehärtbaren Zweikomponenten-Polyurethanlacken, und zwar sowohl als Vernetzer in Pulverlacken als auch als Vernetzer für lösungsmittelhaltige Einbrennlacke.

Bei der erfindungsgemäßen Verwendung der erfindungsgemäßen Lackpolyisocyanate kommen als Reaktionspartner insbesondere die aus der Polyurethanchemie an sich bekannten Hydroxylgruppen aufweisenden Reaktionspartner in Betracht. Es handelt sich hierbei beispielsweise um hydroxylgruppenhaltige Polyester bzw. Copolymerisate wie sie z. B. für Pulverlacke in DE-A-2 842 641 beschrieben werden, andererseits aber auch um hydroxylgruppenhaltige Polyether bzw. Polycarbonate, wie sie z. B. für lösungsmittelhaltige Einbrennlacke in der DE-A-2 550 156 beschrieben werden.

Zur Herstellung der gebrauchsfertigen Pulverlacke werden hydroxylgruppenhaltiges Harz und die erfindungsgemäßen Polyisocyanatvernetzer gemischt und gegebenenfalls mit Pigmenten, Verlaufmittel, Katalysatoren wie z. B. Zinnverbindungen und anderen üblichen Zusatzstoffen versehen und auf Extrudern bei Temperaturen zwischen 100 und 120°C in Schmelze zu einem homogenen Material vermischt. Die hydroxylgruppenhaltigen Harze und erfindungsgemäßen Verfahrensprodukte gelangen hierbei in solchen Mengenverhältnissen zum Einsatz, daß für jede Hydroxylgruppe insgesamt 0,6 bis 1,2, vorzugsweise 0,8 bis 1,0, freie oder blockierte NCO-Gruppen zur Verfügung stehen.

Der erstarrte Feststoff wird gemahlen und durch Sieben auf die gewünschte Korngröße von ca. 0,1 mm eingestellt. Die so hergestellten Pulverlacke können nach üblichen Pulverauftragsverfahren, wie z. B. elektrostatisches Pulversprühen, auf die zu überziehenden Formteile aufgebracht werden. Die

Härtung der Überzüge erfolgt durch Erhitzen auf Temperaturen von 150 bis 220°C, vorzugsweise 170 bis 190°C. Man erhält harte, glänzende und elastische Überzüge mit hervorragenden Korrosionsschutzeigenschaften und einer verbesserten Wärmefarbstabilität.

Zur Herstellung der gebrauchsfertigen lösungsmittelhaltigen Einbrennlacke werden die Lösungen der erfindungsgemäßen Lackpolyisocyanate mit Lösungen der hydroxylgruppenhaltigen Harze gemischt und nach Bedarf mit Katalysatoren, Pigmenten und Verlaufmitteln versehen. Geeignete Lösungsmittel, wie z. B. Toluol, Xylol, Butylacetat, ÄGA (Ethylenglykol-monoethylether-acetat), Methylethylketon, Methylisobutylketon oder N-Methylpyrrolidon sind in Mengen von 30 bis 60 Gew.-%, bezogen auf den gebrauchsfertigen Lack, anwesend.

Die Lacke können gespritzt oder mittels roll-coates appliziert werden. Die beschichteten Teile können bei 120 bis 250°C, in Abhängigkeit vom verwendeten Blockierungsmittel und der vorgesehenen Verweilzeit im Ofen, eingebrannt werden. Derartige Einbrennlacke finden z. B. in der Tubenlackierung oder beim coil-coating von Blechen Verwendung. Neben guter Wetterbeständigkeit zeigen die Lackfilme gute mechanische Eigenschaften.

In den nachfolgenden Beispielen beziehen sich alle Prozentangaben, soweit nicht anders lautend vermerkt, auf Gewichtsprozente.

## Beispiel 1

In diesem Beispiel wird die Herstellung eines erfindungsgemäßen Lackpolyisocyanats auf Basis eines Diethylenglykol-modifizierten Diisocyanatotoluols, dessen Weiterverarbeitung zu einem Pulverlack, das Eigenschaftsniveau dieses Lackes und insbesondere seine Überbrennfestigkeit beschrieben.

### A. Herstellung des Hydrazinadduktes

50 Gew.-Teile ε-Caprolactam werden mit 3,75 Gew.-Teilen Hydrazinhydrat bei 70°C aufgeschmolzen und gemischt. Zu dieser Schmelze gibt man 8,40 Gew.-Teile 2-Oxo-4-methyl-1,3-dioxolan (Propylenglykolcarbonat) und erwärmt unter Rühren auf 100°C (Molverhältnis Hydrazin zu Carbonat = 1 : 1,1). Nach ca. 20 Minuten Umsetzungsdauer legt man Wasserstrahlvakuum an und destilliert bei einer Innentemperatur von 100°C etwa 1,35 Gew.-Teile Wasser ab. Es verbleiben 60,8 Gew.-Teile einer farblosen Schmelze des Hydrazinadduktes in ε-Caprolactam.

### B. Herstellung des Lackpolyisocyanats

In einem Technikumskessel mit Bodenablaßventil werden 174 Gew.-Teile Diisocyanatotoluol (80% 2,4-/20% 2,6-Isomeres) vorgelegt und mit 39,75 Gew.-Teilen Diethylenglykol bei 80 bis 100°C unter Rühren umgesetzt, bis der berechnete NCO-Gehalt von 24,6% erreicht ist. Anschließend wird portionsweise eine Teilmenge an ε-Caprolactam von 71,5 Gew.-Teilen bei 120 bis 130°C eingetragen. Die Blockierungsreaktion verläuft exotherm.

Entsprechend kündigt sich das Ende der Umsetzung durch fallende Temperatur an. Anschließend werden die unter A. beschriebenen 60,8 Gew.-Teile der farblosen Schmelze des Hydrazinaddukts in ε-Caprolactam bei 130 bis 140°C hinzugegeben. Nach beendeter Zugabe wird 20 Minuten bei ca. 140°C nachgerührt und anschließend die Harzschmelze auf Bleche gegossen.

Bezogen auf das Gewicht des zu erhaltenen Hydrazin-modifizierten Lackpolyisocyanats exklusive dem Gewicht des als Blockierungsmittel verwendeten ε-Caprolactams, weist das Lackpolyisocyanat von insgesamt 20,6% NCO 0,47% freie Isocyanatgruppen, 20,13% blockierte Isocyanatgruppen (berechnet als NCO) und 2,48% an Struktureinheiten der Formel

$$-NH-NH-CO-O-$$

auf. 86 Mol-% (oder 21,16%) der NCO-Gruppen des Ausgangsisocyanates (NCO-Gehalt 24,6%) wurden blockiert, 12 Mol-% (oder 2,95%) mit Hydrazinaddukt abreagiert und 2 Mol-% (oder 0,49%) frei gelassen.

### C. Herstellung des Lackes

Für einen Pulverlack werden 46,2 Gew.-Teile eines hydroxylgruppenhaltigen Polyesters auf Basis von Terephthalsäure, Neopentylglykol, Hexandiol-1,6 und Trimethylolpropan mit der OH-Zahl 50, 13,3 Gew.-Teile des unter B. beschriebenen Lackpolyisocyanats, 39,9 Gew.-Teile eines handelsüblichen Titanpigmentes (Rutil) und 0,6 Gew.-Teile eines handelsüblichen Verlaufmittels auf Acrylatbasis in einem Extruder bei 120°C aufgeschmolzen und homogenisiert. Die Dosierung der Bindemittelkomponenten entspricht den Äquivalentgewichten. Bei der diesbezüglichen Berechnung wurden dem

Lackpolyisocyanat, bezogen auf das Gewicht inklusive dem Blockierungsmittel, 13% blockierte und freie NCO-Gruppen zugrundegelegt. Das extrudierte Produkt wird gemahlen; die Kornfraktion von 0,02 bis 0,1 mm wird mittels einer elektrostatischen Sprüheinrichtung auf Prüfbleche appliziert und im Einbrennofen während 15 Minuten bei 180°C ausgehärtet. Der Lack hat die folgenden mechanischen Eigenschaften:

| | |
|---|---|
| Erichsentiefung (DIN 53 156) | 10 mm |
| konischer Dornbiegetest (ASTM D 522-60) | 35% Dehnbarkeit |
| Gitterschnitt (DIN 53 151) | 0 |
| Schlagelastizität (in Anlehnung an ASTM G-14) | 140 cm × kg |

Die Einbrenn- bzw. Überbrennfestigkeit bezüglich der Vergilbung sei anhand folgender vergleichender Testreihe demonstriert:

| | Einbrennbedingungen | | | | |
|---|---|---|---|---|---|
| | 15′ 180°C | 15′ 200°C | 30′ 200°C | 10′ 220°C | 20′ 220°C |
| Weißgrad nach A. Berger 1) | 81 | 78 | 74,7 | 77,8 | 71,5 |
| (Reflektometerwert nach DIN 67 530) 2) | 78 | 73 | 67 | 68 | 61,7 |
| [in Elrepho-Einheiten] | | | | | |

In obiger und in den nachstehenden Tabellen bezieht sich jeweils der erste Wert auf die Einbrennzeit und -temperatur, während die anschließenden Werte sich auf die Überbrennzeiten und -temperaturen des vorher eingebrannten Lacks beziehen.

Die zweite Versuchsreihe gibt die deutlich niedrigeren Weißgradwerte eines analogen Lackes, der sich von dem erfindungsgemäßen nur durch Fehlen des Hydrazinadduktes unterscheidet, wieder.

## Beispiel 2

Die Herstellung eines erfindungsgemäßen Lackpolyisocyanats auf Basis von 4,4′-Diisocyanato-diphenylmethan sowie die Vergilbungsbeständigkeit eines damit hergestellten Pulverlackes beim Einbrennen werden beschrieben.

### A. Herstellung des Hydrazinadduktes

5 Gew.-Teile Hydrazinhydrat werden mit ca. 10 Gew.-Teilen Toluol/Isopropanol (1/1) gemischt. Hierzu werden unter Rühren bei Raumtemperatur 11,2 Gew.-Teile 2-Oxo-4-methyl-1,3-dioxolan (Propylenglykolcarbonat) gegeben (Molverhältnis Hydrazin zu Carbonat = 1 : 1,1). Die Umsetzung verläuft exotherm, so daß die Temperatur der Reaktionsmischung auf ca. 80°C ansteigt. Nach einer kurzen Nachreaktionszeit wird das Lösungsmittel zusammen mit dem Hydratwasser zuerst bei Normaldruck, danach bei Wasserstrahlvakuum abdestilliert, wobei die Sumpftemperatur nicht über 100°C gesteigert wird. Es verbleiben 14,4 Gew.-Teile Hydrazinaddukt in Form einer farblosen Schmelze, die zur Kristallisation neigt.

### B. Herstellung des Lackpolyisocyanat

250 Gew.-Teile an destilliertem 4,4′-Diisocyanato-diphenylmethan werden, wie bereits in Beispiel 1 ausgeführt, in einem Reaktor mit Bodenablaßventil vorgelegt und mit 120 Gew.-Teilen ε-Caprolactam bei 110 bis 130°C umgesetzt. Anschließend werden 28,8 Gew.-Teile der unter A. beschriebenen Schmelze eingetragen. Die Umsetzungstemperatur soll 150°C nicht überschreiten. Nach dem Abklingen der exothermen Umsetzung wird die Restmenge von 60 Gew.-Teilen ε-Caprolactam bei ca. 145°C eingerührt.

Bezogen auf das Gewicht, exklusive dem Gewicht des Blockierungsmittels, weist das so erhaltene Lackpolyisocyanat einen Gehalt an freien NCO-Gruppen von 0%, einen Gehalt an blockierten NCO-Gruppen (berechnet als NCO) von 24% und einen Gehalt an Struktureinheiten der Formel

$$-NH-NH-CO-O-$$

von 5,3% auf. 80 Mol-% (oder 26,9%) der NCO-Gruppen des Ausgangsisocyanates (NCO-Gehalt 33,6%) werden blockiert und 20 Mol-% (oder 6,7%) mit Hydrazinaddukt abreagiert.

C. Herstellung des Lackes

Zur Herstellung eines Pulverlackes werden 47,3 Gew.-Teile des in Beispiel 1 beschriebenen Hydroxyl-Polyesters, 12,2 Gew.-Teile des oben beschriebenen Lackpolyisocyanats, 39,9 Gew.-Teile eines handelsüblichen Titanpigmentes (Rutil) und 0,6 Gew.-Teile eines handelsüblichen Verlaufmittels auf Acrylatbasis, wie in Beispiel 1 beschrieben, zu einem pulverförmig applizierten Lack verarbeitet. Die Dosierung der Bindemittelkomponenten entspricht hierbei dem Verhältnis ihrer Äquivalentgewichte, wobei für das Lackpolyisocyanat, bezogen auf das Gewicht inklusive dem Blockierungsmittel, ein NCO-Gehalt von 14,5% zugrundegelegt wurde. Die mit zunehmender Temperaturbelastung abfallenden Weißgradwerte gibt folgende Übersicht wieder:

| | Einbrennbedingungen 15′ 180°C | 30′ 200°C | 20′ 220°C |
|---|---|---|---|
| Weißgrad nach A. Berger 1) | 80,0 | 66,3 | 56,9 |
| (Reflektometerwert nach DIN 67 530) 2) | 63,2 | 48,1 | 39,6 |
| [in Elrepho-Einheiten] | | | |

Im Vergleich zu dem oben beschriebenen Lack mit dem erfindungsgemäßen Vernetzer wurde ein analoger Lack mit einem Vernetzer ohne diesen geringen Anteil an Hydrazinaddukt hergestellt. Die stärkere Vergilbung dieses Lackes zeigt sich in den niedrigeren Weißgradwerten der 2. Reihe gegenüber denen des mit Hydrazinaddukt stabilisierten Lackes der ersten Reihe.

Beispiel 3

Die Herstellung eines erfindungsgemäßen Lackpolyisocyanats auf Basis von 4,4′-Diisocyanato-dicyclohexylmethan sowie die Vergilbungsbeständigkeit eines damit hergestellten Pulverlackes werden beschrieben.

A. Herstellung des Hydrazinadduktes

57 Gew.-Teile ε-Caprolactam, 7,5 Gew.-Teile Hydrazinhydrat sowie 20,4 Gew.-Teile 2-Oxo-4-methyl-1,3-dioxolan (Propylenglykolcarbonat) werden wie in Beispiel 1 bei 80 bis 100°C umgesetzt und entwässert (Molverhältnis Hydrazin zu Carbonat = 1 : 1,33). Es verbleiben 82,2 Gew.-Teile einer farblosen Schmelze.

B. Herstellung des Lackpolyisocyanats

131 Gew.-Teile 4,4′-Diisocyanato-dicyclohexylmethan werden unter Rühren bei ca. 110°C mit der unter A. hergestellten Schmelze versetzt. Die Temperatur soll bei der Umsetzung 145°C nicht überschreiten. Nach beendeter Zugabe wird bei 145 bis 150°C kurz nachgerührt und auf Bleche abgelassen.

Bezogen auf das Gewicht, exklusive dem Gewicht des Blockierungsmittels, weist das so erhaltene Lackpolyisocyanat einen Gehalt an freien Isocyanatgruppen von 5,3%, einen Gehalt an blockierten Isocyanatgruppen (berechnet als NCO) von 13,4% und einen Gehalt an Struktureinheiten der Formel

$$-NH-NH-CO-O-$$

von 7,1% auf. 50 Mol-% (oder 16,0%) der NCO-Gruppen des Ausgangsisocyanates (NCO-Gehalt 32,0%) werden blockiert, 30 Mol-% (oder 9,6%) mit Hydrazinaddukt abreagiert und 20 Mol-% (oder 6,4%) freigelassen.

C. Herstellung des Lackes

Es werden 45 Gew.-Teile des in Beispiel 1 beschriebenen Hydroxyl-Polyesters, 14,5 Gew.-Teile des obigen Vernetzers, 39,9 Gew.-Teile eines handelsüblichen Titanpigmentes (Rutil) und 0,6 Gew.-Teile eines handelsüblichen Verlaufmittels auf Acrylatbasis gemäß Beispiel 1 zu einem pulverförmig applizierten Lack verarbeitet. Die Bindemittelkomponenten sind hierbei im Verhältnis ihrer Äquivalentgewichte dosiert. Bei der Berechnung des NCO-Vernetzungsäquivalentes wurde ein Gesamt-NCO-Gehalt des Lackpolyisocyanats, bezogen auf das Gewicht, inklusive dem Blockierungsmittel, von 11,7% zugrundegelegt. In der folgenden Übersicht wird die Stabilität dieses Lackes gegen Vergilbung (1. Reihe) im Vergleich zu einem analogen Lack aber ohne Einbau des betreffenden Hydrazinadduktes (2. Reihe) anhand der Weißgradwerte demonstriert:

| | Einbrennbedingungen | | |
|---|---|---|---|
| | 15′ 200°C | 30′ 200°C | 20′ 220°C |
| Weißgrad nach A. Berger 1) | 86,6 | 83,1 | 80,8 |
| (Reflektometerwert nach DIN 67 530) 2) | 78,4 | 74,0 | 63,4 |
| [in Elrepho-Einheiten] | | | |

Beispiel 4

Es wird die Herstellung eines erfindungsgemäßen Lackpolyisocyanats auf Basis eines Isocyanuratgruppen-haltigen, cyclopolymerisierten Hexamethylendiisocyanates sowie die Vergilbungsbeständigkeit eines damit hergestellten Pulverlackes beschrieben.

A. Herstellung des Hydrazinadduktes

0,5 Gew.-Teile Hydrazinhydrat werden mit 0,98 Gew.-Teilen 2-Oxo-1,3-dioxolan (Ethylenglykolcarbonat) gemäß Beispiel 2 A. umgesetzt und aufgearbeitet (Molverhältnis Hydrazin zu Carbonat = 1 : 1,11). Es verbleiben 1,3 Gew.-Teile eines farblosen, kristallisierenden Hydrazinadduktes.

B. Herstellung des Lackpolyisocyanats

19,6 Gew.-Teile trimerisiertes Hexamethylendiisocyanat mit einem NCO-Gehalt von 21,4 Gew.-% werden in analoger Weise zu den vorangegangenen Beispielen zuerst mit 7,9 Gew.-Teilen $\varepsilon$-Caprolactam und danach mit 1,7 Gew.-Teilen 4,4′-Bis-(2-hydroxyethoxy)-diphenylsulfon bei 100 bis 130°C umgesetzt. (Die letztgenannte Diolkomponente dient lediglich der Erhöhung des Schmelzpunktes des Vernetzers und kann bei Anwendung als Lösung durch $\varepsilon$-Caprolactam ersetzt werden.) Nach Abklingen der exothermen Reaktion werden 1,3 Gew.-Teile des unter A. hergestellten Hydrazinadduktes so hinzudosiert, daß die Temperatur bei 130 bis 135°C gehalten wird. Die ausreagierte Harzschmelze wird auf Bleche abgelassen und zerkleinert.

Bezogen auf das Gewicht, exklusive dem Gewicht des verwendeten $\varepsilon$-Caprolactams, weist das so erhaltene Lackpolyisocyanat einen Gehalt an freien NCO-Gruppen von 0%, einen Gehalt an $\varepsilon$-Caprolactam-blockierten NCO-Gruppen (berechnet als NCO) von 13% und einen Gehalt an Struktureinheiten der Formel

$$-NH-NH-CO-O-$$

von 3,28% auf. Von den 100 Mol-% NCO-Gruppen des Diol-modifizierten HDI-Trimerisates (berechneter NCO-Gehalt: 17,8%) werden 77,5 Mol-% (oder 13,8%) blockiert und 22,5 Mol-% (oder 4,0%) mit Hydrazinaddukt abreagiert.

C. Herstellung und Vergilbungseigenschaften des Lackes

42,0 Gew.-Teile des in den Beispielen 1 bis 3 erläuterten Hydroxylpolyesters, 17,5 Gew.-Teile des oben beschriebenen Lackpolyisocyanats (mit einem Gehalt von 9% blockierten NCO-Gruppen), 39,9 Gew.-Teile eines Titanpigmentes (Rutil) und 0,6 Gew.-Teile eines Verlaufmittels auf Acrylatbasis werden, wie in den Beispielen 1 bis 3 beschrieben, zu einem Pulverlack verarbeitet und auf folgende Weise ein- bzw. überbrannt:

| | Einbrennbedingungen 15′ 200°C | 30′ 200°C | 20′ 220°C |
|---|---|---|---|
| Weißgrad nach A. Berger 1) | 83,7 | 78,2 | 74,0 |
| (Reflektometerwert nach DIN 67 530) 2) | 80,7 | 75,3 | 58,6 |
| [Elrepho-Einheiten] | | | |

Mit zunehmender Wärmeeinwirkung tritt eine Verschlechterung der Weißgrade ein. Die 2. Versuchsreihe gibt die schneller abfallenden Weißgrade eines analogen Lackes mit dem Unterschied wieder, daß der Vernetzer anstelle des Hydrazinadduktes nur eine weitere, dem Hydrazinaddukt äquivalente Menge ε-Caprolactam enthält.

## Beispiel 5

Es wird die Herstellung eines erfindungsgemäßen Polyisocyanat-Vernetzers auf Basis von teilweise trimerisiertem Isophorondiisocyanat sowie die Vergilbungsresistenz eines damit hergestellten aus Lösung applizierten Einbrennlackes beschrieben.

### A. Hydrazinumsetzungsprodukt

Es wird das Addukt gemäß Beispiel 2 aus 1 Mol Hydrazin und 1,1 Mol Propylenglykolcarbonat eingesetzt.

### B. Herstellung des Lackpolyisocyanats

153 Gew.-Teile eines bis zu einem NCO-Gehalt von 27,5 Gew.-% trimerisierten Isophorondiisocyanats werden mit 157 Gew.-Teilen Ethylenglykol-monoethylester-acetat gemischt. Hierzu gibt man 61 Gew.-Teile Butanonoxim und nach Abklingen der exothermen Reaktion 21,6 Gew.-Teile Hydrazinumsetzungsprodukt gemäß Beispiel 2. Danach wird bei 100°C umgesetzt, bis kein NCO-Gehalt mehr nachweisbar ist.

Bezogen auf das Gewicht, exklusive dem Gewicht des Blockierungsmittels sowie des Lösungsmittels, weist das so erhaltene Lackpolyisocyanat einen Gehalt an freien Isocyanatgruppen von 0%, einen Gehalt an blockierten Isocyanatgruppen (berechnet als NCO) von 16,8% und einen Gehalt an Struktureinheiten der Formel

$$-NH-NH-CO-O-$$

von 6,35% auf. 70 Mol-% (oder 19,3%) der NCO-Gruppen des Ausgangsisocyanates (NCO-Gehalt: 27,5%) wurden blockiert und 30 Mol-% (oder 8,2%) mit Hydrazinaddukt abreagiert.

### C. Herstellung und Vergilbungseigenschaften des Lackes

23,6 Gew.-Teile eines Hydroxylpolyesters auf Basis von Isophthalsäure, Phthalsäure, Hexandiol-1,6 und Trimethylolpropan mit einer OH-Zahl 165 und einem OH-Äquivalentgewicht 360 werden in 15,8 Gew.-Teilen Ethylenglykol-monoethylether-acetat gelöst und mit 28,1 Gew.-Teilen Titandioxydpigmentes (Rutil) sowie 0,5 Gew.-Teilen eines handelsüblichen Siliconöls abgemahlen. Zu dieser Pigment-Suspension werden 32,0 Gew.-Teile des obigen Lackpolyisocyanats gegeben. Die Dosierung von OH- und NCO-Gruppen-haltigen Bindemittelkomponenten erfolgt hierbei im Molverhältnis 1,15 : 1,0, entsprechend einer Untervernetzung, wobei der Vernetzer-Lösung ein Gehalt an blockierten NCO-Gruppen von 7,5% zugrundeliegt.

Die auf Prüfbleche gesprühte Lack-Komposition wird unter folgenden Bedingungen ein- bzw. überbrannt:

| | Einbrennbedingungen 30′ 150°C | 15′ 200°C | 15′ 220°C |
|---|---|---|---|
| Weißgrad nach A. Berger 1) | 85,9 | 84,8 | 83,2 |
| (Reflektometerwert nach DIN 67 530) 2) | 83,5 | 81,6 | 79,6 |

Die 2. Versuchsreihe gibt die stärkere Abnahme der Weißgrade bei einem analogen, aber nicht mit Hydrazinaddukt modifizierten Lack wieder.

**Patentansprüche**

1. Lackpolyisocyanate, gekennzeichnet durch einen Gehalt, bezogen auf das Gewicht ohne Einbeziehung des Gewichts des Blockierungsmittels,

a) an freien Isocyanatgruppen von 0 bis 8 Gew.-%,
b) an mit an sich bekannten Blockierungsmitteln blockierten Isocyanatgruppen von 10 bis 28 Gew.-% und
c) Struktureinheiten der Formel

$$-NH-NH-CO-O-$$

von 2 bis 10 Gew.-%.

2. Verfahren zur Herstellung von Lackpolyisocyanaten gemäß Anspruch 1, dadurch gekennzeichnet, daß man

a) 10 bis 30 Mol-% der Isocyanatgruppen eines organischen Polyisocyanats mit (i) alkoholische Hydroxylgruppen und (ii) Struktureinheiten der Formel

$$-O-CO-NH-NH-CO-O-$$

und/oder der Formel

$$H_2N-NH-CO-O-$$

aufweisenden Umsetzungsprodukten von 1 Mol Hydrazin mit 1 bis 2 Mol eines cyclischen Carbonats unter Bildung von Urethangruppen und gegebenenfalls Gruppen der Formel

$$-NH-NH-CO-O-$$

zur Reaktion bringt und
b) 50 bis 90 Mol-% der Isocyanatgruppen des Ausgangsisocyanats mit an sich bekannten Blockierungsmitteln blockiert,

wobei die Umsetzung gemäß a) vor, während oder nach der Umsetzung b) vorgenommen wird.

3. Verfahren gemäß Anspruch 2, dadurch gekennzeichnet, daß man beim Reaktionsschritt a) Umsetzungsprodukte von Hydrazin oder Hydrazinhydrat mit Ethylen- oder Propylencarbonat verwendet.

4. Verfahren gemäß Ansprüchen 2 und 3, dadurch gekennzeichnet, daß man als organisches Polyisocyanat Polyisocyanate oder Polyisocyanatgemische mit einem (mittleren) NCO-Gehalt von 14 bis 50 Gew.-%, ausgewählt aus der Gruppe bestehend aus Hexamethylendiisocyanat, 1-Isocyanato-3,3,5-trimethyl-5-isocyanatomethyl-cyclohexan, 4,4′-Diisocyanato-dicyclohexylmethan, 2,4- und/oder 2,6-Diisocyanatotoluol, 2,4′- und/oder 4,4′-Diisocyanato-diphenylmethan, Urethangruppen aufweisende Umsetzungsprodukte dieser Diisocyanate mit unterschüssigen Mengen an aliphatischen Di- oder Triolen des Molekulargewichtsbereichs 62—400 und den Isocyanat- und Isocyanuratgruppen aufweisenden Trimerisaten bzw. Mischtrimerisaten der genannten Diisocyanate, verwendet werden.

5. Verwendung der Lackpolyisocyanate gemäß Anspruch 1 als Isocyanat-Komponente in hitzehärtbaren Zweikomponenten-Polyurethanlacken.

## Claims

1. Lacquer polyisocyanates, characterised by a content, based on the weight excluding the weight of the blocking agent, of

a) 0 to 8% by weight of free isocyanate groups,
b) 10 to 28% by weight of isocyanate groups blocked with blocking agents known per se and
c) 2 to 10% by weight of structural units of the formula

—NH—NH—CO—O—

2. Process for the production of lacquer polyisocyanates according to claim 1, characterised in that

a) 10 to 30 mol-% of the isocyanate groups of an organic polyisocyanate are reacted with reaction products, containing (i) alcoholic hydroxyl groups and (ii) structural units of the formula

—O—CO—NH—NH—CO—O—

and/or of the formula

$H_2N$—NH—CO—O—

of 1 mol of hydrazine and 1 to 2 mols of a cyclic carbonate with the formation of urethane groups and optionally groups of the formula

—NH—NH—CO—O—

and

b) 50 to 90 mol-% of the isocyanate groups of the starting isocyanate are blocked with blocking agents known per se,

the reaction according to a) being carried out before, during or after the reaction b).

3. Process according to claim 2, characterised in that reaction products of hydrazine or hydrazine hydrate with ethylene or propylene carbonate are used in reaction step a).

4. Process according to claims 2 and 3, characterised in that as the organic polyisocyanate polyisocyanates or polyisocyanate mixtures with an (average) NCO content of 14 to 50% by weight, selected from the group consisting of hexamethylene diisocyanate, 1-isocyanato-3,3,5-trimethyl-5-isocyanatomethyl-cyclohexane, 4,4'-diisocyanato-dicyclohexyl methane, 2,4- and/or 2,6-diisocyanatotoluene, 2,4'- and/or 4,4'-diisocyanato-diphenyl methane, urethane-group-containing reaction products of these diisocyanates with excess quantities of aliphatic diols or triols of the molecular weight range of 62—400 and the trimers or mixed trimers, containing isocyanate and isocyanurate groups, of the stated diisocyanates, are used.

5. Use of the lacquer polyisocyanates according to claim 1 as the isocyanate component in thermosetting two-component polyurethane lacquers.

## Revendications

1. Polyisocyanates de vernis, caractérisés en ce que, calculé sur le poids sans inclure le poids de l'agent de blocage, ils contiennent:

a) 0 à 8% en poids de groupes isocyanate libres,
b) 10 à 28% en poids de groupes isocyanate bloqués avec des agents de blocage connus en soi, et
c) 2 à 10% en poids de motifs structuraux de formule:

—NH—NH—CO—O—

2. Procédé de préparation de polyisocyanates de vernis suivant la revendication 1, caractérisé en ce que:

a) on fait réagir 10 à 30% molaires des groupes isocyanate d'un polyisocyanate organique avec des produits réactionnels d'une mole d'hydrazine avec 1—2 moles d'un carbonate cyclique, ces

produits réactionnels comportant (i) des groupes hydroxy alcooliques et (ii) des motifs structuraux de formule:

—O—CO—NH—NH—CO—O—

et/ou de formule:

$H_2N$—NH—CO—O—

avec formation de groupes uréthane et éventuellement de groupes de formule:

—NH—NH—CO—O—

et

b) on bloque 50 à 90% molaires des groupes isocyanate de l'isocyanate de départ avec des agents de blocage connus en soi,

la réaction suivant (a) étant effectuée avant, pendant ou après la réaction (b).

3. Procédé suivant la revendication 2, caractérisé en ce que, lors de l'étape réactionnelle (a), on utilise des produits réactionnels d'hydrazine ou d'hydrate d'hydrazine avec le carbonate d'éthylène ou le carbonate de propylène.

4. Procédé suivant les revendications 2 et 3, caractérisé en ce que, comme polyisocyanates organiques, on utilise des polyisocyanates ou des mélanges de polyisocyanates ayant une teneur (moyenne) en groupes NCO de 14 à 50% en poids et choisis parmi le groupe comprenant l'hexaméthylène-diisocyanate, le 1-isocyanato-3,3,5-triméthyl-5-isocyanatométhylcyclohexane, le 4,4'-diisocyanato-dicyclohexylméthane, le 2,4- et/ou le 2,6-diisocyanatotoluène, le 2,4'- et/ou le 4,4'-diisocyanato-diphénylméthane, des produits réactionnels (comportant des groupes uréthane) de ces diisocyanates avec des quantités déficitaires de diols ou de triols aliphatiques d'un poids moléculaire se situant dans l'intervalle de 62—400 et les trimères ou les trimères mixtes des diisocyanates mentionnés, comportant des groupes isocyanate et isocyanurate.

5. Utilisation des polyisocyanates de vernis suivant la revendication 1 comme composant isocyanate dans des vernis de polyuréthanes à deux composants durcissables à la chaleur.